# EUROPÄISCHE PATENTANMELDUNG

(11) **EP 4 679 381 A1**
(43) Veröffentlichungstag der Anmeldung: **14.01.2026**
(21) Anmeldenummer: 24188309.9
(22) Anmeldetag: 12.07.2024
(51) Int. Cl.: G06V 10/25, G06V 10/20, G06V 10/26, G06V 10/82, G06V 20/52, G06V 20/58, G06V 20/64, G06V 40/10, G06V 10/764

(54) **SENSORSYSTEM**

(71) Anmelder: SICK AG, 79183 Waldkirch (DE)
(72) Erfinder: Bexten, Simone, 79106 Freiburg (DE); Bamberger, Tobias, 79104 Freiburg (DE); Lindinger, Maximilian, 79183 Waldkirch (DE); Junker, Patrick, 77736 Zell a. H. (DE); Altendorf, Hellen, 79199 Kirchzarten (DE); Roser, Florian, 79211 Denzlingen (DE); Heinz, Matthias, 79183 Waldkirch (DE); Werner, Stefan, 33102 Paderborn (DE); Herb, Daniel, 79312 Emmendingen (DE)
(74) Vertreter: Manitz Finsterwald Patent- und Rechtsanwaltspartnerschaft mbB

(57) **Zusammenfassung**

Die Erfindung betrifft ein Sensorsystem zur Überwachung eines Raumbereichs im Außenbereich oder in einer Industrieanlage, beispielsweise zum Einsatz auf einem bemannten Fahrzeug oder einem autonom fahrenden Flurförderzeug, umfassend eine Sensoranordnung, wobei das Sensorsystem ausgebildet ist, 3D-Daten des Raumbereichs zu erzeugen, wobei das Sensorsystem zudem 2D-Daten des Raumbereichs erzeugt. Dabei weist das Sensorsystem eine Recheneinrichtung auf, welche ausgebildet ist, eine Personendetektionsmethode auf den 2D-Daten des Raumbereichs auszuführen, um Personen in dem Raumbereich zu erkennen, wobei für eine erkannte Person 2D-Positionsdaten ermittelt werden, wobei die Recheneinrichtung weiterhin ausgebildet ist, anhand der 2D-Positionsdaten für die erkannte Person, der erkannten Person zugehörige 3D-Daten zuzuordnen, wobei die Recheneinrichtung ferner ausgebildet ist, aus den der erkannten Person zugehörigen 3D-Daten, 3D-Positionsdaten für die erkannte Person zu bestimmen.

## Beschreibung

Die vorliegende Erfindung betrifft ein Sensorsystem zur Überwachung eines Raumbereichs im Außenbereich oder eines Raumbereichs in einer Industrieanlage, beispielsweise zum Einsatz auf einem bemannten Fahrzeug oder einem autonom fahrenden Flurförderzeug, umfassend eine Sensoranordnung, wobei das Sensorsystem oder die Sensoranordnung ausgebildet ist, 3D-Daten des Raumbereichs zu erzeugen.

Sensorsysteme auf Fahrzeugen im Außenbereich, wie z.B. auf Baustellen, in Minen oder im Tagebau, können dazu dienen, Kollisionen mit Personen oder Gegenständen zu vermeiden und sind prinzipiell bekannt. Auch Sensorsysteme zur Überwachung von Raumbereichen in industriellen Anlagen sind grundsätzlich bekannt. Solche Sensorsysteme werden beispielsweise dazu eingesetzt, das Eindringen einer Person in einen Schutzbereich zu erkennen. Beim Eindringen in einen solchen Schutzbereich kann dann die industrielle Maschine verlangsamt oder angehalten werden, um die Person nicht zu gefährden.

Die Erkennung von Personen und insbesondere die Unterscheidung von Personen und anderen Objekten kann dabei aufwändig sein, was bei industriellen Anlagen, bei welchen einerseits nur eine begrenzte Rechenleistung vorhanden ist, andererseits aber hohe Anforderungen an die Auswertungsgeschwindigkeit bestehen, nachteilig sein kann. Dabei ist es insbesondere auch herausfordernd, nicht nur die Person zu erkennen, sondern auch den Standort der Person im dreidimensionalen Raum zu bestimmen.

Es ist daher eine der Erfindung zugrunde liegende Aufgabe, ein Sensorsystem anzugeben, welches eine schnelle und effiziente Erkennung von Personen in einem Raumbereich ermöglicht.

Diese Aufgabe wird durch ein Sensorsystem gemäß Anspruch 1 gelöst.

Das Sensorsystem gemäß der Erfindung dient zur Überwachung eines Raumbereichs im Außenbereich oder in einer Industrieanlage und insbesondere zum Einsatz auf einem bemannten Fahrzeug oder einem autonom fahrenden Flurförderzeug. Das Sensorsystem umfasst eine Sensoranordnung, beispielsweise eine Stereokamera, wobei das Sensorsystem oder die Sensoranordnung ausgebildet ist, 3D-Daten des Raumbereichs zu erzeugen, wobei das Sensorsystem zudem 2D-Daten des Raumbereichs erzeugt. Das Sensorsystem weist eine Recheneinrichtung auf, welche ausgebildet ist, eine, insbesondere auf einer künstlichen Intelligenz basierende, Personendetektionsmethode auf den 2D-Daten des Raumbereichs auszuführen, um Personen in dem Raumbereich zu erkennen, wobei für eine erkannte Person 2D-Positionsdaten ermittelt werden. Die Recheneinrichtung ist bevorzugt weiterhin ausgebildet, anhand der 2D-Positionsdaten für die erkannte Person, der erkannten Person zugehörige 3D-Daten zuzuordnen. Schließlich ist die Recheneinrichtung ausgebildet, aus den der erkannten Person zugehörigen 3D-Daten, 3D-Positionsdaten für die erkannte Person zu bestimmen.

Die 3D-Positionsdaten können die Position der erkannten Person im dreidimensionalen Raumbereich angeben.

Die Erfindung setzt dabei auf der Erkenntnis auf, dass durch die Ausführung der Personendetektionsmethode auf den 2D-Daten eine effiziente aber trotzdem zuverlässige Erkennung von Personen durchgeführt werden kann. Dies liegt darin begründet, dass die 2D-Daten weniger umfangreich und damit einfacher zu verarbeiten sind, als die 3D-Daten, welche zusätzlich Tiefeninformationen bzw.

Abstandsinformationen enthalten. Erfindungsgemäß kann also zunächst die Position der Person in den 2D-Daten ermittelt werden, wobei dann aufgrund der so erhaltenen Position, welche durch die 2D-Positionsdaten ausgedrückt wird, die zugehörigen Datenpunkte in den 3D-Daten ermittelt werden. Aus den 3D-Daten lässt sich dann die dreidimensionale Position der Person feststellen. Die dreidimensionale Position der Person wird dann durch die 3D-Positionsdaten repräsentiert.

Durch das erfindungsgemäße Vorgehen kann insbesondere Rechenleistung bei der initialen Erkennung und Detektion der Person eingespart werden, sodass sich das erfindungsgemäße Sensorsystem im Allgemeinen für Industrieanwendungen und insbesondere für mobile Industrieanwendungen eignet.

Aufgrund der effizienten Personendetektion kann das Sensorsystem für eine Personenerkennung in Echtzeit ausgebildet sein. Beispielsweise kann eine Personenerkennung weniger als 1 00ms oder weniger als 70ms in Anspruch nehmen.

Nachfolgend werden weitere Details der Erfindung beschrieben.

Bei dem Raumbereich kann es sich beispielsweise um denjenigen dreidimensionalen Bereich der Industrieanlage handeln, welcher von der Sensoranordnung erfasst werden kann. Die Sensoranordnung kann einen oder mehrere Sensoren umfassen. Beispielsweise kann die Sensoranordnung eine Stereokamera zur dreidimensionalen Erfassung des Raumbereichs aufweisen. Alternativ oder zusätzlich zur Stereokamera sind aber auch andere Sensorarten möglich, beispielsweise 3D TOF (Time-of-Flight) Kameras, LIDAR-Systeme (Light Detection and Ranging), Laserscanner und dergleichen. Die Sensoranordnung kann grundsätzlich auch eine 2D-Kamera umfassen, welche beispielsweise ein RGB- oder Intensitäts- oder Graustufen-Bild erzeugt, wobei das RGB- oder Graustufenbild dann als 2D-Daten genutzt werden kann.

Bei der Recheneinrichtung kann es sich insbesondere um einen Prozessor, beispielsweise um eine CPU oder GPU handeln. Die Recheneinrichtung kann auch Zusatzprozessoren aufweisen, wie später noch ausgeführt wird.

Die Personendetektionsmethode dient zur Erkennung, ob und wo sich in dem Raumbereich zumindest eine Person aufhält. Die Personendetektionsmethode kann rein algorithmisch ausgebildet sein, basiert bevorzugt aber insbesondere auf einer künstlichen Intelligenz. Unter einer künstlichen Intelligenz soll hierin generell ein Verfahren verstanden werden, welches Maschinenlernalgorithmen, neuronale Netze oder dergleichen einsetzt.

Wie bereits angedeutet, können die 2D-Daten insbesondere jeweils Daten für zwei Dimensionen umfassen, also beispielsweise ein zweidimensionales Bild darstellen. Die 3D-Daten weisen bevorzugt zusätzlich noch Abstandsdaten auf, umfassen also eine dritte Dimension. Die Abstandsdaten können beispielsweise von der Sensoranordnung aus gemessen seien. Die 2D-Daten und insbesondere die 3D-Daten können jeweils als Punktwolke vorliegen.

Beispielsweise können die 3D-Daten durch Projektion auf eine zweidimensionale Ebene in die 2D-Daten überführt werden. Auf diese Weise kann eine Korrespondenz zwischen 2D-Daten und 3D-Daten hergestellt werden.

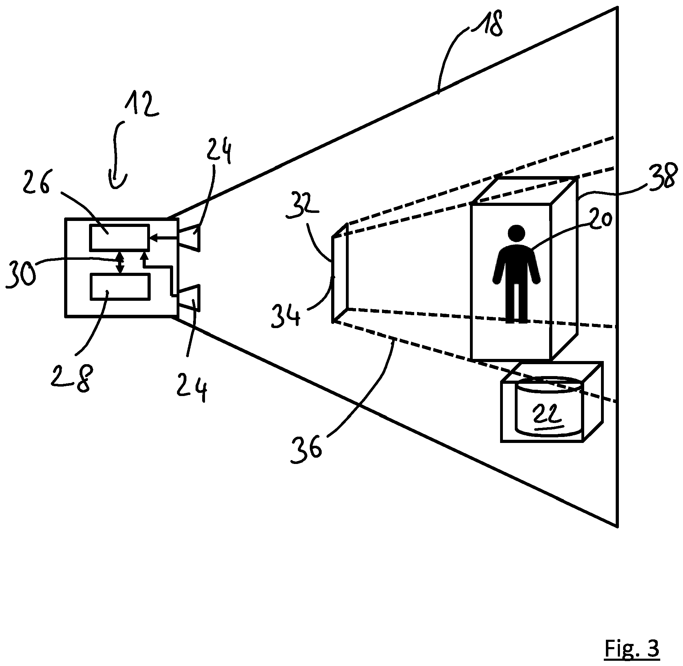

Der Personendetektionsmethode werden bevorzugt die 2D-Daten zugeführt, sodass die Personendetektionsmethode in den 2D-Daten eine möglicherweise dort vorhandene Person erkennen kann. Die Personendetektionsmethode kann dann die 2D-Positionsdaten zurückliefern, welche angeben, wo in den 2D-Daten die Person erkannt wurde. Es kann sich dabei um einen 2-D Positionsbereich, also z.B. eine Bounding-Box handeln, wie später noch genauer erläutert wird. Nachdem die zweidimensionale Position oder der zweidimensional Positionsbereich bekannt ist, können die zu den 2D-Positionsdaten zugehörigen 3D-Daten ermittelt werden. Insbesondere können als die zugehörigen 3D-Daten diejenigen Datenpunkte der Punktewolke herangezogen werden, welche mit den 2D-Positionsdaten korrespondieren, wie später in Fig. 3 noch gezeigt ist. Anders ausgedrückt können die zugehörigen 3D-Daten auf die 2D-Positionsdaten projiziert werden.

Wie später ebenfalls noch detaillierter ausgeführt, können aus den so bestimmten 3D-Daten die tatsächlich zur Person gehörigen 3D-Daten ermittelt werden, woraus sich dann 3D-Positionsdaten für die erkannte Person ergeben. Auf diese Weise kann die dreidimensionale Position der Person im Raum bestimmt werden.

Vorteilhafte Weiterbildungen der Erfindung sind der Beschreibung, den Zeichnungen sowie den abhängigen Ansprüchen zu entnehmen.

Gemäß einer ersten Ausführungsform ist die Recheneinrichtung ausgebildet, für die Personendetektionsmethode zur Ermittlung der 2D-Positionsdaten ausschließlich die 2D-Daten zu verwenden. Bevorzugt werden die 3D-Daten also nicht für die Personendetektionsmethode verwendet, wodurch die Personendetektion vereinfacht wird, weniger Speicher benötigt und einen geringeren Rechenaufwand verursacht. Auf diese Weise kann die Implementierung in einem mobilen Sensorsystem effizienter gestaltet werden.

Gemäß einer weiteren Ausführungsform ist das Sensorsystem und insbesondere die Recheneinrichtung ausgebildet, die 2D-Daten aus den 3D-Daten zu erzeugen. Die Sensoranordnung kann damit eine Doppelfunktion besitzen und zugleich die 3D-Daten und auch die 2D-Daten erzeugen. Damit werden Hardwareanforderungen verringert, da eine zusätzliche zweidimensionale Kamera eingespart werden kann. Bei einer Stereokamera lässt sich die Erzeugung der 2D-Daten beispielsweise dadurch realisieren, indem zumindest einer der beiden Bildsensoren als 2D Bildsensor fungiert.

Gemäß einer weiteren Ausführungsform umfasst die Personendetektionsmethode die Verwendung einer künstlichen Intelligenz, insbesondere eines künstlichen neuronalen Netzes, bevorzugt eines gefalteten neuronalen Netzwerks, eines sogenannten "convolutional neural networks", CNN. Solch eine künstliche Intelligenz und insbesondere das CNN eignen sich zur Detektion von Personen in Bildern, da die künstliche Intelligenz mit einer Vielzahl von Bildern von Personen in unterschiedlichen Posen, Kleidung und Lichtverhältnissen trainiert werden kann, wodurch eine zuverlässige Erkennung ermöglicht wird.

Für das Training der künstlichen Intelligenz und insbesondere des neuronalen Netzes können beispielsweise gelabelte Daten verwendet werden. Durch das Label kann bekannt sein, ob und an welcher Position in einem jeweiligen Bild des Datensatzes eine Person zu sehen ist. Beispiele für solche Datensätze von gelabelten Bildern, welche vorliegend verwendet werden könnten, sind MS-COCO, Objekts365, OpenimagesV7, SODA und dergleichen. Das Training der künstlichen Intelligenz kann insbesondere als sogenanntes "supervised learning" erfolgen. In dem Training werden der künstlichen Intelligenz jeweils Bilder aus dem Datensatz zugeführt, wobei die künstliche Intelligenz dann für jedes Bild ermittelt, ob und an welcher Position in dem Bild eine Person zu sehen ist. Weichen die Ergebnisse der künstlichen Intelligenz von den zu dem jeweiligen Bild gespeicherten Daten ab, werden beispielsweise bei einem neuronalen Netz die dort verwendeten Gewichte und/oder Vorspannungen angepasst. Das Anpassen der Gewichte, sowie das alternative oder zusätzliche Anpassen der Vorspannung innerhalb des neuronalen Netzes erfolgt dabei mit dem Ziel, eine vorgegebene Funktion, die sogenannte Verlustfunktion (loss-function) zu minimieren. Anders ausgedrückt wird eine Funktionsapproximation durchgeführt, indem die Abweichung zu einer Zielfunktion minimiert wird. Das Training der künstlichen Intelligenz kann auf einer anderen Recheneinrichtung als der Recheneinrichtung des Sensorsystems ablaufen. Nach dem Training wird die fertig trainierte künstliche Intelligenz dann auf die Recheneinrichtung des Sensorsystems übertragen.

Insbesondere kann für das neuronale Netz ein neuronales Netz mit mehreren Schichten (sogenannte Layer) eingesetzt werden. Beispielsweise kann ein neuronales Netz mit zumindest 20, 40 oder 60 Schichten verwendet werden. Als Beispiel kann ein sogenanntes YOLO-Netz (You Only Look Once) verwendet werden, insbesondere das Netz YOLOX Large Leaky. Das künstliche neuronale Netz kann beispielsweise mehr als 20 Millionen, mehr als 40 Millionen oder mehr als 50 Millionen Parameter umfassen.

Insbesondere kann eine Eingangsschicht des künstlichen neuronalen Netzes eine Anzahl von Neuronen aufweisen, die zumindest der Anzahl der Bildpunkte der (in einem Einzelbild) in den 2D-Daten enthaltenen Bildern entspricht.

Gemäß einer weiteren Ausführungsform wurde die künstliche Intelligenz zumindest zum Teil (oder vollständig) mit 2D-Daten in Form von Bildern trainiert, wobei bevorzugt die Auflösung, das bedeutet, die Anzahl der Bildpunkte, der Bilder weniger als 30 %, bevorzugt weniger als 20 %, weiter bevorzugt 0 %, von der Auflösung der (im Betrieb) von der Personendetektionsmethode erhaltenen 2D-Daten abweicht. Beispielsweise können die in den oben genannten Bildbibliotheken enthaltenen Bilder derart skaliert und/oder heruntergetastet werden, dass deren Auflösung der Auflösung der im Betrieb von der Personendetektionsmethode erhaltenen 2D-Daten entspricht. Auf diese Weise kann die künstliche Intelligenz ideal auf die im Betrieb erhaltenen Daten trainiert werden, sodass beispielsweise auch an einer Reichweitengrenze der Sensoranordnung noch Personen korrekt erkannt werden können.

Gemäß einer weiteren Ausführungsform ist das Sensorsystem ausgebildet, dreidimensionale Schutz- und/oder Warnfelder innerhalb des Raumbereichs vorzusehen, wobei eine Verletzung eines Schutz- und/oder Warnfelds basierend auf den 3D-Positionsdaten erfolgt, wobei bei einer Verletzung eines Schutz- und/oder Warnfelds durch eine erkannte Person ein Warnsignal ausgegeben wird, insbesondere durch das Sensorsystem. Die Schutz- und/oder Warnfelder können eine zweidimensionale oder dreidimensionale Gestalt aufweisen. Bei einem dreidimensionalen Schutz- und/oder Warnfeld kann von einem Volume of Interest (Vol) gesprochen werden. Dabei ist es vorteilhafter Weise möglich, durch die Kenntnis der dreidimensionalen Position der Person (also durch die 3D-Positionsdaten), zu bestimmen, ob sich die Person tatsächlich im Schutz- oder Warnfeld befindet oder ob sich die Person beispielsweise noch hinter dem Schutz- oder Warnfeld aufhält. Nach Empfang des Warnsignals kann beispielsweise ein autonomes Fahrzeug dann seine Fahrt verlangsamen, stoppen oder die erkannte Person in sicherem Abstand umfahren.

Insbesondere kann das Sensorsystem eine Feldkonfigurationseinrichtung umfassen, mit welcher die Feldgrenzen von Schutzfeldern und/oder Warnfeldern eingestellt oder angepasst werden können. Schutzfelder können dabei auf unzulässige Eingriffe überwacht werden, wobei im Falle eines solchen Eingriffs insbesondere eine sicherheitsgerichtete Abschaltung erfolgen kann. Warnfelder können ebenfalls auf unzulässige Eingriffe überwacht werden, können aber lediglich einen Alarm auslösen, um das Fahrzeug z.B. zu verlangsamen. Warnfelder sind häufig den Schutzfeldern vorgelagert, damit die Person, die den Eingriff verursacht, womöglich noch rechtzeitig von einem Schutzfeldeingriff abgehalten werden kann.

Gemäß einer weiteren Ausführungsform umfassen die 3D-Positionsdaten eine dreidimensionale Hülle, innerhalb welcher sich die erkannte Person bzw. eine Repräsentation der erkannten Person befindet, wobei die dreidimensionale Hülle beispielsweise quaderförmig, zylinderförmig, zylinderstumpfförmig oder unregelmäßig ausgebildet ist, also beispielsweise eine sogenannte Bounding-Box bildet. Insbesondere können auch die zur Person gehörenden Punkte direkt angegeben (und z.B. markiert) werden. Alternativ oder zusätzlich umfassen die 3D-Positionsdaten eine 3D-Position, dies bedeutet die 3D-Positionsdaten geben einen definierten Punkt im Raum an, an welchem sich die Person oder die dreidimensionale Hülle befindet. Überdies können die 3D-Positionsdaten auch eine Pose der erkannten Person umfassen. Die Pose kann eine Haltung und/oder eine Ausrichtung der erkannten Person angeben. Diese Ausführungen gelten entsprechend für 3D-Positionsdaten für erkannte Objekte.

Gemäß einer weiteren Ausführungsform umfassen die 2D-Positionsdaten eine zweidimensionale Hülle, innerhalb welcher sich eine Repräsentation der erkannten Person befindet, wobei die zweidimensionale Hülle bevorzugt rechteckig ausgebildet ist, also ebenfalls eine (zweidimensionale) Bounding-Box bilden kann. Alternativ oder zusätzlich umfassen die 2D-Positionsdaten ebenfalls eine Position, nämlich eine 2D-Position, die angibt, wo in den 2D-Daten sich die Person und/oder die zweidimensionale Hülle befindet. Allgemein ausgedrückt, umfassen die 3D-Positionsdaten und/oder die 2D-Positionsdaten also Informationen, die die Ermittlung der Position der Person in den 2D-Daten und/oder den 3D-Daten ermöglicht.

Bevorzugt ist die Recheneinrichtung ausgebildet, einen Tracking-Algorithmus auszuführen, welcher die erkannte Person verfolgt. Die Verfolgung kann bevorzugt über mehrere verschiedene Eingangsbilder, insbesondere über sich ändernde 2D-Daten und/oder 3D-Daten erfolgen. Der Einsatz des Tracking-Algorithmus kann die Personenerkennung noch zuverlässiger gestalten, da für eine einmal erkannte Person bei sich ändernden 2D-Daten (d.h. im nächsten Frame) bereits ungefähr bekannt ist, wo sich die Person befindet.

Gemäß einer weiteren Ausführungsform wird, insbesondere durch die Recheneinrichtung, für das Zuordnen der der erkannten Person zugehörigen 3D-Daten ein Kandidatenraum definiert, in welchem potenziell die der erkannten Person zugehörigen 3D-Daten liegen. Dabei wird der Kandidatenraum (zumindest oder lediglich) bereichsweise durch die 2D-Positionsdaten und insbesondere die zweidimensionale Hülle der 2D-Positionsdaten, begrenzt. Dabei umfasst der Kandidatenraum bevorzugt ein Frustum, welches auf einer der Sensoranordnung zugewandten Seite durch die 2D-Positionsdaten begrenzt ist und sich von der Sensoranordnung weg erstreckt.

Anders ausgedrückt geben die 2D-Positionsdaten also eine Fläche in einem Bild der 2D-Daten an. In dem Kandidatenraum liegen bevorzugt alle Datenpunkte, die, insbesondere aus Sicht der Sensoranordnung, mit dieser Fläche korrespondieren. Der Bereich hinter der Fläche weitet sich von der Sensoranordnung aus gesehen im dreidimensionalen Raum auf, da die Sichtlinien der Sensoranordnung sich mit steigendem Abstand zur Sensoranordnung ebenfalls aufweiten. Daher wird mit steigendem Abstand von der Sensoranordnung die zwischen den Sichtlinien befindliche Fläche größer, sodass sich ein Frustum ergibt, also eine pyramidenstumpfförmige Form mit insbesondere rechteckiger Deckfläche. Die Deckfläche des Frustums entspricht bevorzugt der Fläche in dem Bild der 2D-Daten, also den 2D-Positionsinformationen.

Die 2D-Positionsdaten können auch eine Schätzung der Entfernung zu der erkannten Person umfassen. In diesem Fall können die 2D-Positionsdaten dann mit einem Abstand zur Sensoranordnung in dem Raumbereich angeordnet werden, sodass sich der Kandidatenraum verkleinert.

Letztlich wird durch den Kandidatenraum eine Anzahl an Datenpunkten definiert, welche potenziell zu der erkannten Person gehören.

Gemäß einer weiteren Ausführungsform ist die Recheneinrichtung ausgebildet, aus den 3D-Daten innerhalb des Kandidatenraums die der erkannten Person zugehörigen 3D-Daten zu ermitteln, indem
- eine Kerndichteschätzung auf den 3D-Daten und insbesondere auf den Abstandswerten der 3D-Daten erfolgt;
- ein Histogramm für die 3D-Daten und insbesondere die Abstandswerte der 3D-Daten erzeugt wird;
   und/oder
- ein Mittelwert und/oder ein Medianwert der 3D-Daten und insbesondere der Abstandswerte der 3D-Daten berechnet wird.

Bevorzugt wird ein Maximum der Kerndichteschätzung oder des Histogramms als Abstandswert der erkannten Person verwendet.

Die vorstehend erwähnten Möglichkeiten zur Kerndichteschätzung, zum Histogramm sowie zum Mittel- und/oder Medianwert müssen nicht notwendigerweise auf sämtlichen 3D-Daten innerhalb des Kandidatenraums erfolgen, es kann auch nur eine Teilmenge der 3D-Daten des Kandidatenraums herangezogen werden. Beispielsweise kann die Teilmenge unter der Annahme bestimmt werden, dass sich die Person mit höherer Wahrscheinlichkeit im Zentrum des Kandidatenraums befindet.

Anders ausgedrückt muss aus den 3D-Daten innerhalb des Kandidatenraums ermittelt werden, welche Datenpunkte zu der Person gehören. Dazu können die oben genannten Möglichkeiten verwendet werden. Beispielsweise kann eine 3D-Lokalisierung also anhand einer Kerndichteschätzung (Kernel Density Estimation, KDE) erfolgen. Bei der Kerndichteschätzung können die Abstandswerte der 3D-Daten auf einen 1 D-Raum abgebildet, wobei dann mittels eines Filters eine Verteilungsfunktion geschätzt wird. Bei dem Filter kann es sich beispielsweise um einen Gauß-Kern, einen "Tophat" oder einen linearen Kern handeln. Beispielsweise für diejenige Position, an dem die Verteilungsfunktion ein Maximum liefert, kann dann angenommen werden, dass sich dort die Person befindet.

Alternativ oder zusätzlich kann das erwähnte Histogramm für die Abstandswerte der 3D-Daten erzeugt werden, wobei wiederum nach dem Maximum der Verteilung gesucht und dessen Tiefenwert zurückgegeben werden kann, um die 3D-Positionsdaten für die erkannte Person zu bestimmen. Insbesondere kann der zurückgegebenen Tiefenwert als der Distanzwert verwendet werden, welcher eine Distanz zum Zentrum der Bounding-Box in den 3D-Positionsdaten angibt.

Bei der Berechnung des Mittelwerts und/oder des Medianwerts wird insbesondere direkt der ermittelte Mittelwert oder Medianwert als Abstandswert für die Person bzw. die Bounding-Box oder die dreidimensionale Hülle verwendet.

Allgemein können zu der erkannten Person zugehörige 3D-Daten als Cluster angesehen werden.

Gemäß einer weiteren Ausführungsform weist die Recheneinrichtung einen Hauptprozessor und einen Coprozessor auf, wobei der Coprozessor zur Ausführung einer künstlichen Intelligenz, insbesondere der oben genannten, optimiert ist und die Personendetektionsmethode zumindest überwiegend ausführt. Da das Ausführen der künstlichen Intelligenz üblicherweise eine Vielzahl von Matrix-Multiplikations- und/oder Akkumulations-Gleitkomma-Operationen benötigt, ist die Auslagerung an einen speziell auf diese Rechenoperationen optimierten Coprozessor von Vorteil.

Der Coprozessor kann auch, insbesondere lediglich, zur Ausführung von Ganzzahl-Operationen (Integer-Operationen) ausgebildet sein. Vor der Ausführung von für die künstliche Intelligenz notwendigen Berechnungsschritten auf dem Coprozessor können die Eingangswerte für die Berechnungsschritte in Ganzzahlen umgewandelt werden, beispielsweise durch Quantisierung.

Gemäß einer weiteren Ausführungsform ist die künstliche Intelligenz und insbesondere das neuronale Netz, welche der Coprozessor ausführt, insbesondere nur, für die Verarbeitung zweidimensionaler Daten ausgebildet. Aufgrund des Umstands, dass die Personendetektionsmethode die 2D-Daten verwendet, kann die künstliche Intelligenz auf die Verarbeitung von 2D-Daten optimiert sein. Eine Ausführung von Maschinenlernoperationen für 3D-Daten kann mit der künstlichen Intelligenz auf dem Coprozessor nicht möglich sein, wodurch die Operationen für 2D-Daten besonders schnell und energieeffizient ablaufen können. Insbesondere kann der Coprozessor keine dreidimensionalen Faltungen vornehmen.

Durch die Einschränkung auf einen auf 2D-Operationen spezialisierten Coprozessor kann ein Energieverbrauch der Recheneinrichtung gegenüber einer universellen Recheneinrichtung beispielsweise um bis zu 90 % reduziert werden.

Bevorzugt kann es sich bei dem Coprozessor um einen KI Beschleuniger Chip handeln, welcher beispielsweise mit dem Hauptprozessor über PCI Express gekoppelt ist.

Gemäß einer weiteren Ausführungsform ist die Recheneinrichtung ausgebildet, basierend auf den 3D-Daten ein Objekterkennung vorzunehmen, wobei Objekte bevorzugt aufgrund einer Mindestgröße erkannt werden, und für erkannte Objekte 3D-Daten und/oder 3D-Positionsdaten auszugeben. Neben der Personenerkennung kann das Sensorsystem also ausgebildet sein, auch allgemein Objekte zu erkennen. Es kann sich dabei insbesondere um eine andere Kategorie der Erkennung handeln, welche beispielsweise anhand der Größe eines Objekts erfolgt. Die Objekterkennung erfolgt bevorzugt ohne vorherige Bearbeitung von 2D-Daten, also direkt auf den 3D-Daten. Die Erkennung erfolgt dementsprechend auf einem einfacheren Prinzip, ermöglicht es aber nicht beispielsweise zwischen Personen und Gegenständen zu unterscheiden. Das Sensorsystem kann insbesondere ausgebildet sein, für die erkannten Objekte ebenfalls eine dreidimensionale Hülle und/oder eine dreidimensionale Position auszugeben. Das Sensorsystem kann zudem ausgeben, ob es sich jeweils um eine Person oder allgemein um ein Objekt handelt. Eine derartige Unterscheidung kann dann dazu genutzt werden, Objekte lediglich zu umfahren, wohingegen bei Anwesenheit von Personen weitere, z.B. sicherheitsgerichtete, Einschränkungen vorgenommen werden können.

Gemäß einer weiteren Ausführungsform ist das Sensorsystem eine abgeschlossene Einheit, insbesondere mit einem eigenen Gehäuse, in welcher bzw. in welchem die Sensoranordnung und die Recheneinrichtung angeordnet sind.

Durch die effiziente Verarbeitung der 2D- und 3D-Daten zur Erkennung von Personen ist es möglich, die Recheneinrichtung und die Sensoranordnung im selben Gehäuse anzuordnen. Auch kann die Software zum Betrieb des Sensorsystems, insbesondere die künstliche Intelligenz, vollständig in dem Sensorsystem integriert sein. Das Gehäuse kann eine Datenschnittstelle umfassen, mit welcher das Sensorsystem beispielsweise mit einem Fahrzeug koppelbar ist, sodass dem Fahrzeug die von dem Sensorsystem erkannten Personen und/oder Objekte über die Datenschnittstelle mitgeteilt werden. Durch die Ausbildung als abgeschlossene Einheit kann das Sensorsystem besonders kompakt ausgebildet sein und ist flexibel einsetzbar.

Grundsätzlich ist es auch möglich, die Personenerkennungsmethode durch eine Personen- und Objekterkennungsmethode zu ersetzen. Die Personen- und Objekterkennungsmethode kann ausgebildet sein, neben Personen auch vordefinierte Objekte zu erkennen, insbesondere Objekte aus dem Einsatzbereich des industriellen Umfelds oder der Arbeitsumgebung bzw. des Raumbereichs im Außenbereich, z.B. Paletten, Gitterkörbe, Anhänger, Fahrzeuge, Schilder, Tiere und dergleichen. Auf diese Weise kann eine Kollision z.B. mit anderen Fahrzeugen vermieden werden. Die Personen- und Objekterkennungsmethode kann bevorzugt nur wenige verschiedene Objekte erkennen, beispielsweise weniger als 5 oder weniger als 3 verschiedene Objekte. Dadurch kann eine zuverlässige Erkennung sichergestellt werden. Die Ausführungen zur Personendetektionsmethode gelten für die Personen- und Objekterkennungsmethode entsprechend. Ebenfalls kann die Personen- und Objekterkennungsmethode eine künstliche Intelligenz einsetzen, die mit einer Vielzahl z.B. von Bildern der jeweiligen Objekte trainiert wurde.

Auch hier gelten die Ausführungen zur Personenerkennungsmethode und der künstlichen Intelligenz entsprechend.

Weiterer Gegenstand der Erfindung ist ein Fahrzeug, insbesondere ein bemanntes oder autonomes Fahrzeug, beispielsweise ein autonomes Flurförderzeug oder ein Stapler oder Bagger, umfassend eine Steuereinrichtung zur Steuerung des Fahrzeugs und ein Sensorsystem der hierin beschriebenen Art. Dabei sind die Steuereinrichtung und das Sensorsystem mittels einer Datenverbindung gekoppelt und die Steuereinrichtung ist ausgebildet, 3D-Daten und/oder 3D-Positionsdaten, insbesondere von erkannten Personen und/oder erkannten Objekten, des Sensorsystems bei der Steuerung des Fahrzeugs zu verwenden.

Das Sensorsystem kann derart auf dem Fahrzeug montiert sein, dass der von dem Sensorsystem überwachte Raumbereich einer zukünftigen Fahrstrecke des Fahrzeugs entspricht. Alternativ oder zusätzlich kann der überwachte Raumbereich auch rückwärtige oder seitliche Bereiche des Fahrzeugs umfassen, um vor dort befindlichen Personen und/oder Objekten zu warnen. Das Sensorsystem kann dementsprechend eine Assistenzfunktion für einen menschlichen Fahrer des Fahrzeugs erfüllen.

Weiterer Gegenstand der Erfindung ist ein Verfahren zur Überwachung eines Raumbereichs im Außenbereich oder eines Raumbereichs in einer Industrieanlage, beispielsweise zum Einsatz bei einem bemannten Fahrzeug oder einem autonom fahrenden Flurförderzeug, wobei bei dem Verfahren 3D-Daten des Raumbereichs mittels einer Sensoranordnung erzeugt werden, wobei zudem 2D-Daten des Raumbereichs erzeugt werden. Dabei wird eine, insbesondere auf einer künstlichen Intelligenz basierende, Personendetektionsmethode auf den 2D-Daten des Raumbereichs ausgeführt, um Personen in dem Raumbereich zu erkennen, wobei für eine erkannte Person 2D-Positionsdaten ermittelt werden, wobei anhand der 2D-Positionsdaten für die erkannte Person, der erkannten Person zugehörigen 3D-Daten zugeordnet werden, wobei aus den der erkannten Person zugehörigen 3D-Daten, 3D-Positionsdaten für die erkannte Person bestimmt werden.

Die Ausführungen zu dem erfindungsgemäßen Sensorsystem gelten für das erfindungsgemäße Fahrzeug und das erfindungsgemäße Verfahren entsprechend. Dies gilt insbesondere hinsichtlich Vorteilen und bevorzugten Ausführungsformen. Überdies versteht es sich, dass sämtliche hierin genannten Merkmale und Ausführungsformen miteinander kombinierbar sind, sofern nicht etwas Gegenteiliges angegeben ist.

Nachfolgend wird die Erfindung rein beispielhaft unter Bezugnahme auf die Zeichnungen beschrieben. Es zeigen:
Fig. 1 ein autonomes Flurförderzeug mit einer Sensoranordnung in einem industriellen Umfeld;
Fig. 2 ein Fahrzeug mit einer Sensoranordnung in einer Arbeitsumgebung im Außenbereich;
Fig. 3 eine Erkennung einer Person und eines Objekts durch eine Sensoranordnung.

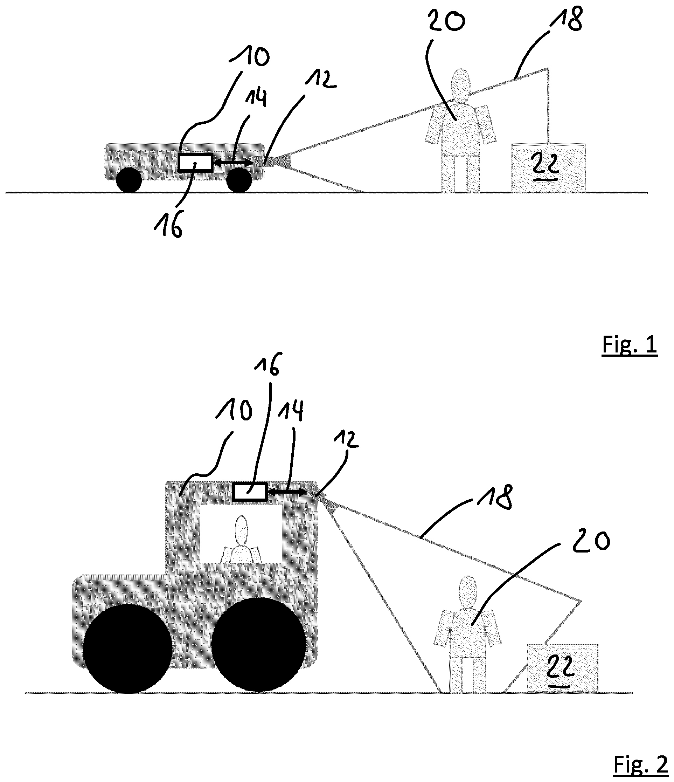

Fig. 1 zeigt ein fahrerloses autonom fahrendes Flurförderzeug 10, welches mit einem Sensorsystem 12 ausgestattet ist. Das Sensorsystem 12 ist über eine Datenverbindung 14 mit einer Steuereinrichtung 16 des Flurförderzeugs 10 gekoppelt.

Das Sensorsystem 12 überwacht einen Raumbereich 18, in welchem sich eine Person 20 und ein Objekt 22, beispielsweise eine Palette, zumindest bereichsweise befinden.

Bei dem Flurförderzeug 10 von Fig. 1 ist das Sensorsystem 12 mit einem relativ kurzen Abstand zum Boden angebracht.

Von dem Sensorsystem 12 erkannte Personen 20 oder Objekte 22 können über die Datenverbindung 14 an die Steuereinrichtung 16 gemeldet werden, so dass das Flurförderzeug 10 seinen Betrieb an die erkannten Personen 20 und Objekte 22 anpassen kann.

Fig. 2 zeigt ein alternatives Flurförderzeug 10, nämlich einen im Außenbereich eingesetzten Gabelstapler, welcher durch einen menschlichen Bediener betrieben wird. Bei dem Flurförderzeug 10 von Fig. 2 ist das Sensorsystem 12 deutlich erhöht über dem Boden angebracht, sodass sich der überwachte Raumbereich 18 hin zum Boden erstreckt. Auch bei dem Flurförderzeug 10 von Fig. 2 ist das Sensorsystem 12 über eine Datenverbindung 14 mit einer Steuereinrichtung 16 gekoppelt. Von dem Sensorsystem 12 erkannte Personen 20 oder Objekte 22 können dem Bediener des Flurförderzeugs 10 beispielsweise auf einem (nicht gezeigten) Display dargestellt werden.

Details zur Erkennung einer Person 20 oder von Objekten 22 sind in Fig. 3 dargestellt.

Das Sensorsystem 12 ist in Fig. 3 als Stereokamera mit zwei parallel zueinander ausgerichteten Kameras 24 ausgebildet. Die Kameras 24 sind mit einem Hauptprozessor 26 gekoppelt, sodass der Hauptprozessor 26 die von den Kameras 24 erzeugten Bilddaten erhält. Bei den Bilddaten kann es sich insbesondere um 2D-Daten handeln, welche von dem Hauptprozessor 26 dann in 3D-Daten umgerechnet. Die Erzeugung der 3D-Daten kann auch durch die Kameras 24 selbst erfolgen.

Es liegen dann sowohl 2D-Daten als auch 3D-Daten vor, wobei die 2D-Daten insbesondere ein RGB-Bild einer der Kameras 24 umfassen können.

Das Sensorsystem 12 umfasst zudem einen Coprozessor 28, insbesondere in Form eines KI Beschleuniger Chips, welcher beispielsweise über eine PCI Express Verbindung 30 mit dem Hauptprozessor 26 gekoppelt ist.

Der Hauptprozessor 26 überträgt 2D-Daten an den Coprozessor 28, sodass der Coprozessor 28 auf den 2D-Daten eine Personendetektionsmethode ausführt, welche ein künstliches neuronales Netz zur Personenerkennung nutzt.

Die Personendetektionsmethode liefert dabei 2D-Positionsdaten 32 für die Person 20 zurück. Die 2D-Positionsdaten 32 umfassen eine 2D-Bounding Box 34, welche einen Positionsbereich in dem Raumbereich 18 angibt, sowie eine Position der 2D-Bounding Box 34. Basierend auf der 2D-Bounding Box 34 wird ein Frustum 36 gebildet, welches denjenigen Bereich einschließt, welcher von dem Sensorsystem 12 aus gesehen hinter der 2D-Bounding Box 34 liegt. In dem Frustum 36 liegt die Person 20 sowie ein Teil des Objekts 22. Diese Objekte können in den 3D-Daten jeweils als Punktwolke vorliegen. Durch eine Kerndichteschätzung können diejenigen Punkte in der Punktwolke, welche zu der Person 20 gehören, identifiziert werden. Daraufhin können 3D-Positionsdaten für die erkannte Person 20 bestimmt werden, welche im hier vorliegenden Beispiel als 3D-Bounding Box 38 die Position und die ungefähre Größe der Person 20 angeben.

Da die Personendetektionsmethode speziell auf die Erfassung von Personen 20 ausgelegt ist, liefert das Objekt 22, welches sich ebenfalls in dem Raumbereich 18 befindet, kein Ergebnis der Personendetektionsmethode zurück. Insbesondere kann der Hauptprozessor 26 direkt auf den 3D-Daten allein, beispielsweise aufgrund einer Größenerkennung, das Objekt 22 detektieren und ebenfalls 3D-Positionsdaten für das Objekt 22 in Form einer 3D-Bounding Box 38 ausgeben.

Die 3D-Positionsdaten für die Person 20 und das Objekt 22 können dann an die Steuereinrichtung 16 des Flurförderzeugs 10 übermittelt werden, um das Flurförderzeug 10 um das Objekt 22 herum zu steuern und gegebenenfalls bei Annäherung an die Person 20 zu verlangsamen, zu stoppen oder den Fahrer zu warnen.

### Bezugszeichenliste

10 Flurförderzeug
12 Sensorsystem
14 Datenverbindung
16 Steuereinrichtung
18 Raumbereich
20 Person
22 Objekt
24 Kamera
26 Hauptprozessor
28 Coprozessor
30 PCI Express Verbindung
32 2D-Positionsdaten
34 2D-Bounding Box
36 Frustum
38 3D-Bounding Box

## Patentansprüche

1. Sensorsystem (12) zur Überwachung eines Raumbereichs (18) im Außenbereich oder in einer Industrieanlage, beispielsweise zum Einsatz auf einem bemannten Fahrzeug oder einem autonom fahrenden Flurförderzeug, umfassend eine Sensoranordnung (24), wobei das Sensorsystem (12) ausgebildet ist, 3D-Daten des Raumbereichs (18) zu erzeugen, wobei das Sensorsystem (12) zudem 2D-Daten des Raumbereichs (18) erzeugt,
wobei das Sensorsystem (12) eine Recheneinrichtung (26, 28) aufweist, welche ausgebildet ist, eine Personendetektionsmethode auf den 2D-Daten des Raumbereichs (18) auszuführen, um Personen (20) in dem Raumbereich (18) zu erkennen, wobei für eine erkannte Person (20) 2D-Positionsdaten (32) ermittelt werden,
wobei die Recheneinrichtung (26, 28) weiterhin ausgebildet ist, anhand der 2D-Positionsdaten (32) für die erkannte Person (20), der erkannten Person (20) zugehörige 3D-Daten zuzuordnen, wobei die Recheneinrichtung (26, 28) ferner ausgebildet ist, aus den der erkannten Person (20) zugehörigen 3D-Daten, 3D-Positionsdaten (38) für die erkannte Person (20) zu bestimmen.

2. Sensorsystem (12) nach Anspruch 1,
wobei die Recheneinrichtung (26, 28) ausgebildet ist, für die Personendetektionsmethode zur Ermittlung der 2D-Positionsdaten (32) ausschließlich die 2D-Daten zu verwenden.

3. Sensorsystem (12) nach Anspruch 1 oder 2,
wobei das Sensorsystem (12) und insbesondere die Recheneinrichtung (26, 28) ausgebildet ist, die 2D-Daten aus den 3D-Daten zu erzeugen.

4. Sensorsystem (12) nach einem der vorstehenden Ansprüche,
wobei die Personendetektionsmethode die Verwendung einer künstlichen Intelligenz, insbesondere eines künstlichen neuronalen Netzes, bevorzugt eines gefalteten neuronalen Netzwerks, Convolutional Neural Network, umfasst.

5. Sensorsystem (12) nach Anspruch 4,
wobei die Künstliche Intelligenz mit 2D-Daten in Form von Bildern trainiert wurde, wobei die Auflösung der Bilder weniger als 50% oder weniger als 30%, bevorzugt weniger als 20%, von der Auflösung der von der Personendetektionsmethode erhaltenen 2D-Daten abweicht.

6. Sensorsystem (12) nach einem der vorstehenden Ansprüche,
wobei das Sensorsystem (12) ausgebildet ist, dreidimensionale Schutz- und/oder Warnfelder innerhalb des Raumbereichs (18) vorzusehen, wobei eine Verletzung eines Schutz- und/oder Warnfelds basierend auf den 3D-Positionsdaten (38) erfolgt, wobei bei einer Verletzung eines Schutz- und/oder Warnfelds durch eine erkannte Person (20) ein Warnsignal ausgegeben wird.

7. Sensorsystem (12) nach einem der vorstehenden Ansprüche,
wobei die 3D-Positionsdaten (38) eine dreidimensionale Hülle (38), innerhalb welcher sich die erkannte Person (20) befindet, und/oder eine 3D-Position umfassen, wobei die dreidimensionale Hülle (38) bevorzugt quaderförmig ausgebildet ist,
und/oder
die 2D-Positionsdaten (32) eine zweidimensionale Hülle (34), innerhalb welcher sich die erkannte Person (20) befindet, und/oder eine 2D-Position umfassen, wobei die zweidimensionale Hülle (34) bevorzugt rechteckig ausgebildet ist.

8. Sensorsystem (12) nach einem der vorstehenden Ansprüche,
wobei für das Zuordnen der der erkannten Person (20) zugehörigen 3D-Daten ein Kandidatenraum definiert wird, in welchem potentiell die der erkannten Person (20) zugehörigen 3D-Daten liegen, wobei der Kandidatenraum bereichsweise durch die 2D-Positionsdaten (32) begrenzt wird, wobei der Kandidatenraum bevorzugt ein Frustum (36) umfasst, welches auf einer der Sensoranordnung (24) zugewandten Seite durch die 2D-Positionsdaten (32) begrenzt ist und sich von der Sensoranordnung (24) weg erstreckt.

9. Sensorsystem (12) nach Anspruch 8,
wobei die Recheneinrichtung (26, 28) ausgebildet ist, aus den 3D-Daten innerhalb des Kandidatenraums die der erkannten Person (20) zugehörigen 3D-Daten zu ermitteln, indem
- eine Kerndichteschätzung auf den 3D-Daten erfolgt;
- ein Histogramm für die 3D-Daten erzeugt wird; und/oder
- ein Mittelwert und/oder ein Medianwert der 3D-Daten berechnet wird, wobei bevorzugt ein Maximum der Kerndichteschätzung oder des Histogramms als Abstandswert der erkannten Person (20) verwendet wird.

10. Sensorsystem (12) nach einem der vorstehenden Ansprüche,
wobei die Recheneinrichtung (26, 28) einen Hauptprozessor (26) und einen Coprozessor (28) aufweist, wobei der Coprozessor (28) zur Ausführung einer künstlichen Intelligenz optimiert ist und die Personendetektionsmethode zumindest überwiegend ausführt.

11. Sensorsystem (12) nach Anspruch 10,
wobei die künstliche Intelligenz, welche der Coprozessor (28) ausführt, insbesondere nur, für die Verarbeitung zweidimensionaler Daten ausgebildet ist.

12. Sensorsystem (12) nach einem der vorstehenden Ansprüche,
wobei die Recheneinrichtung (26, 28) ausgebildet ist, basierend auf den 3D-Daten eine Objekterkennung vorzunehmen, wobei Objekte bevorzugt aufgrund einer Mindestgröße erkannt werden, und für erkannte Objekte 3D-Daten und/oder 3D-Positionsdaten (38) auszugeben.

13. Sensorsystem (12) nach einem der vorstehenden Ansprüche,
wobei das Sensorsystem (12) eine abgeschlossene Einheit ist, insbesondere mit einem eigenen Gehäuse, in welcher die Sensoranordnung (24) und die Recheneinrichtung (26, 28) angeordnet sind.

14. Fahrzeug, insbesondere bemanntes oder autonomes Fahrzeug, beispielsweise autonomes Flurförderzeug oder Stapler oder Bagger, umfassend eine Steuereinrichtung zur Steuerung des Fahrzeugs und ein Sensorsystem (12) nach einem der vorstehenden Ansprüche, wobei die Steuereinrichtung und das Sensorsystem (12) mittels einer Datenverbindung gekoppelt sind und die Steuereinrichtung ausgebildet ist, 3D-Daten und/oder 3D-Positionsdaten (38) des Sensorsystems (12) bei der Steuerung des Fahrzeugs zu verwenden.

15. Verfahren zur Überwachung eines Raumbereichs (18) im Außenbereich oder eines Raumbereichs in einer Industrieanlage, beispielsweise zum Einsatz bei einem bemannten Fahrzeug oder einem autonom fahrenden Flurförderzeug, wobei bei dem Verfahren 3D-Daten des Raumbereichs (18) bevorzugt mittels einer Sensoranordnung (24) erzeugt werden, wobei zudem 2D-Daten des Raumbereichs (18) erzeugt werden,
wobei eine Personendetektionsmethode auf den 2D-Daten des Raumbereichs (18) ausgeführt wird, um Personen (20) in dem Raumbereich (18) zu erkennen, wobei für eine erkannte Person (20) 2D-Positionsdaten (32) ermittelt werden,
wobei anhand der 2D-Positionsdaten (32) für die erkannte Person (20), der erkannten Person (20) zugehörige 3D-Daten zugeordnet werden,
wobei aus den der erkannten Person (20) zugehörigen 3D-Daten, 3D-Positionsdaten (38) für die erkannte Person (20) bestimmt werden.
